# EUROPÄISCHE PATENTANMELDUNG

(11) **EP 4 566 441 A1**
(43) Veröffentlichungstag der Anmeldung: **11.06.2025**
(21) Anmeldenummer: 24200333.3
(22) Anmeldetag: 13.09.2024
(51) Int. Cl.: A01F 25/13, A01F 25/16

(54) **ANORDNUNG ZUM ABDECKEN ZUMINDEST EINER SCHÜTTUNG IN ZUMINDEST EINEM FAHRSILO**

(30) Priorität: 08.12.2023 DE 102023134399
(71) Anmelder: Thümler, Rainer, 26931 Elsfleth (DE)
(72) Erfinder: Thümler, Rainer, 26931 Elsfleth (DE)
(74) Vertreter: Jabbusch, Matthias

(57) **Zusammenfassung**

Bei einer Anordnung zum Abdecken zumindest einer Schüttung in zumindest einem von Wänden begrenzten Fahrsilo, umfassend zumindest ein Flächenelement zum Auflegen auf die Schüttung, ist vorgesehen, dass für das Flächenelement wenigstens eine Aufwickelungseinrichtung vorgesehen ist, wobei die Aufwickelungseinrichtung in einem Bereich des Fahrsilos anordbar ist, der dem Bereich der Entnahme von Schüttgut aus dem Fahrsilo entfernt ist.

Mit dieser Anordnung ist eine einfachere Handhabung des Flächenelementes ermöglicht, so dass die Entnahme von Bestandteilen aus der Schüttung erleichtert ist.

## Beschreibung

Die Erfindung betrifft eine Anordnung zum Abdecken zumindest einer Schüttung in zumindest einem von Wänden begrenzten Fahrsilo, umfassend zumindest ein Flächenelement zum Auflegen auf die Schüttung.

Schüttgüter werden zu verschiedenen Zwecken eingesetzt, sie sind für diese Zwecke durchaus für längere Zeit zu bevorraten. Bei Schüttgütern kann es sich beispielsweise um pflanzliche Bestandteile für die Tierhaltung handeln, es können aber auch pflanzliche Bestandteile für eine Biogasanlage bevorratet werden. Da dieses Bevorraten durchaus über mehrere Wochen oder auch über mehrere Monate andauern kann, sind die in der Schüttung aufgenommen Bestandteile gegen Witterungseinflüsse, gegen Sonneneinstrahlung und gegen andere Einflüsse zu schützen. Dazu dient das auf die Schüttung aufgelegte Flächenelement, das Folien und auch Krähennetze umfassen kann. Regelmäßig wird ein derartiges Flächenelement dann mit alten Autoreifen oder ähnlichen Bewehrungselementen insbesondere gegen einen Windangriff beschwert.

Mit derartigen Flächenelementen gelingt eine Abdeckung der Schüttung, wenn aber Bestandteile aus der Schüttung entnommen werden sollen, ist das auf die Schüttung aufgelegte Flächenelement häufig ein Hindernis. Es ist dem Einsatz von Werkzeugen, wie beispielsweise einem Radlader im Weg. Daher muss es vor Entnahme der Bestandteile der Schüttung von der Schüttung zurückgeschlagen werden oder im Bereich der Entnahme umständlich manuell aufgerollt werden.

Der Erfindung liegt die Aufgabe zugrunde, der Anordnung der eingangs genannten aufzuzeigen, mit der eine einfachere Handhabung des Flächenelementes ermöglicht ist, so dass die Entnahme von Bestandteilen aus der Schüttung erleichtert ist.

Diese Aufgabe ist erfindungsgemäß dadurch gelöst, dass für das Flächenelement wenigstens eine Aufwickelungseinrichtung vorgesehen ist, wobei die Aufwickelungseinrichtung in einem Bereich des Fahrsilos anordbar ist, der dem Bereich der Entnahme von Schüttgut aus dem Fahrsilo entfernt ist.

Die für das Flächenelement vorgesehene Aufwickelungseinrichtung kann dazu eingesetzt werden, das Flächenelement aufzuwickeln. Damit ist vorteilhaft diese Aufwickelarbeit nicht mehr manuell durchzuführen.

Das Aufwickeln des Flächenelementes mit der Aufwickelungseinrichtung erfolgt nach der Erfindung in einem Bereich des Fahrsilos, der dem Bereich der Entnahme von Schüttgut aus dem Fahrsilo entfernt ist. Durch diese Anordnung ist gewährleistet, dass das Flächenelement mit der Aufwickelungseinrichtung durch Aufwickeln aus dem Bereich der Entnahme von Schüttgut weggeführt wird. Ein Bereich zur Entnahme von Schüttgut wird frei gegeben, indem von diesem Bereich das Flächenelement zurückgezogen wird. Eine einfache Entnahme von Schüttgut aus dem Fahrsilo ist dadurch gewährleistet.

Nach einer ersten Weiterbildung der Erfindung ist vorgesehen, dass die Aufwickelungseinrichtung einem kürzeren Seitenrand eines rechteckig ausgebildeten Fahrsilos zugeordnet ist. Ein derartig rechteckig ausgebildetes Fahrsilo kann dutzende Meter lang sein. Es ist regelmäßig mit Wänden an den längeren Seitenrändern des Fahrsilos begrenzt. Die Entnahme von Schüttgut erfolgt dann an einem kürzeren Seitenrand des Fahrsilos, an dem anderen, von dem Bereich der Entnahme von Schüttgut entfernten kürzeren Seitenrand kann dann die Aufwickelungseinrichtung angeordnet sein. Dabei ist sie zweckmäßigerweise außerhalb des Fahrsilos angeordnet, das Flächenelement kann mit der Aufwickelungseinrichtung von dem Fahrsilo in einen Bereich außerhalb des Fahrsilos zumindest abschnittsweise gezogen werden.

Eine nächste Weiterbildung der Erfindung sieht vor, dass die Aufwickelungseinrichtung nahe einer Wand des Fahrsilos angeordnet ist und dass auf der Wand ein Führungsprofil als Abgleiter für das Flächenelement während seines Aufwickelns in der Aufwickelungseinrichtung angeordnet ist. Nach dieser Weiterbildung ist auch auf dem der Entnahme von Schüttgut entgegengesetzten kürzeren Seitenrand des Fahrsilos eine Wand vorhanden. Diese Wand kann mit den Seitenwänden des Fahrsilos verbunden sein, um eine geschlossene Aufnahme für die Schüttgüter auszubilden. Möglich ist aber auch, dass diese Wand von den anderen Wänden etwas entfernt ist oder für den Einsatz der erfindungsgemäßen Anordnung zusätzlich aufgebaut wird. Die Wand bildet eine Grundlage für ein Führungsprofil, über das das Flächenelement gezogen wird. Das Führungsprofil dient als Abgleiter. Es führt die Längsränder der Folie, die den Längswänden des Fahrsilos zugeordnet sind, nach außen. So wird vorteilhaft verhindert, dass das Flächenelement beim Abziehen in seiner Mitte zusammenläuft

Das Führungsprofil kann dabei eine aufgestellte rechteckige Kulisse sein, die mit einem längeren Seitenrand auf der Wand aufliegt, wobei an den freien Enden ihres anderen längeren Seitenrandes nach außen abfallende Rücksprünge ausgebildet sind. Ein derartig ausgebildetes Führungsprofil bewirkt ein nach außen Führen des Flächenelementes. Gerade die nach außen abfallenden Rücksprünge führen das Flächenelement nach außen.

Für die Aufwickelungseinrichtung sieht eine Weiterbildung der Erfindung vor, dass sie zumindest eine Aufwickelwelle hat. Diese Aufwickelwelle ist zweckmäßigerweise für den gesamten kürzeren Seitenrand des Fahrsilos verlaufend ausgebildet.

Der Aufwickelwelle ist nach einer Weiterbildung eine Antriebseinrichtung zugeordnet, diese arbeitet vorzugsweise in beide Richtungen. Durch ein Aufwickeln des Flächenelementes wird die Schüttung freigegeben, wird eine neue Schüttung im Fahrsilo angelegt, kann eine Gegenrichtung der Antriebseinrichtung das Abwickeln und Wiederverwenden des Flächenelementes erleichtern.

Das Flächenelement ist vorzugsweise mehrlagig. Es kann eine Abdeckfolie und ein Krähennetz umfassen. Auch das mit der erfindungsgemäßen Anordnung handhabbare Flächenelement kann mit Bewehrungselementen, wie alten Autoreifen oder Sandsäcken belegt sein. Diese werden bei einem Aufwickeln des Flächenelementes und damit einhergehendem Abziehen des Flächenelementes von der Schüttung mit von der Schüttung gezogen. Für diese Bewehrungselemente kann im Bereich der Aufwickelungseinrichtung eine Ablagefläche angeordnet sein, auf die die Bewehrungselemente während des Aufwickelns des Flächenelementes fallen.

Zur weiteren Ausbildung der Erfindung kann noch vorgesehen sein, dass das Flächenelement am im Bereich der Entnahme von Schüttgut aus dem Fahrsilo angeordneten freien Ende zumindest ein Abschlussprofil hat. Dieses Abschlussprofil bildet das der Entnahme von Schüttgut zugekehrte Ende des Flächenelementes aus. Es wird bei einem Aufwickeln des Flächenelementes vom Entnahmebereich weggezogen, dabei kann es noch eine auf dem Schüttgut aufliegende Unterziehfolie mitnehmen. In anderen Bereichen des Flächenelementes bleibt diese Unterziehfolie auf dem Schüttgut liegen. Ein Abschneiden der Unterziehfolie ist nicht erforderlich.

Ein Ausführungsbeispiel der erfindungsgemäßen Anordnung ist in der Zeichnung dargestellt. Es zeigen:
- Figur 1:: eine Draufsicht auf ein Fahrsilo mit einer Anordnung zum Abdecken zumindest einer Schüttung,
- Figur 2:: eine Seitenansicht des Fahrsilos aus Figur 1,
- Figur 3:: eine weitere Seitenansicht des Fahrsilos aus Figur 1
- Figur 4:: eine maßstäblich vergrößerte Ansicht der Einzelheit IV in Figur 2,
- Figur 5:: eine maßstäblich vergrößerte Ansicht der Einzelheit V in Figur 1,
- Figur 6:: eine maßstäblich vergrößerte Ansicht der Einzelheit VI in Figur 2, und
- Figur 7:: eine maßstäblich vergrößerte Ansicht der Einzelheit VII in Figur 3.

Das Fahrsilo ist rechteckig ausgebildet. Es hat längere Seitenwände 1 und eine kürzere Seitenwand 2. Die Seitenwände 1, 2 stehen auf einem Boden 3 auf, auf diesen Boden 3 ist eine Schüttung 4 zwischen die Seitenwände 1 aufgebracht.

Die Schüttung 4 ist mit einem Flächenelement 5 belegt. Das Flächenelement 5 ist Teil der erfindungsgemäßen Anordnung zum Abdecken, es bedeckt die Schüttung 4 vollständig, nur ein schmaler Bereich der Schüttung 4 bleibt frei zur Entnahme.

Der kürzeren Seitenwand 2 des Fahrsilos ist eine Aufwickelungseinrichtung 6 für das Flächenelement 5 zugeordnet. Die Aufwickelungseinrichtung 6 hat eine Aufwickelwelle 7, die parallel zur Seitenwand 2 über deren gesamte Länge verläuft. Wird die Aufwickelwelle 7 in eine Drehung versetzt, dann erfolgt ein Aufwickeln des Flächenelementes 5 in Richtung der Pfeile 8. Eine Folge dieses Aufwickelns ist eine Freigabe eines größeren Entnahmebereiches der Schüttung 4.

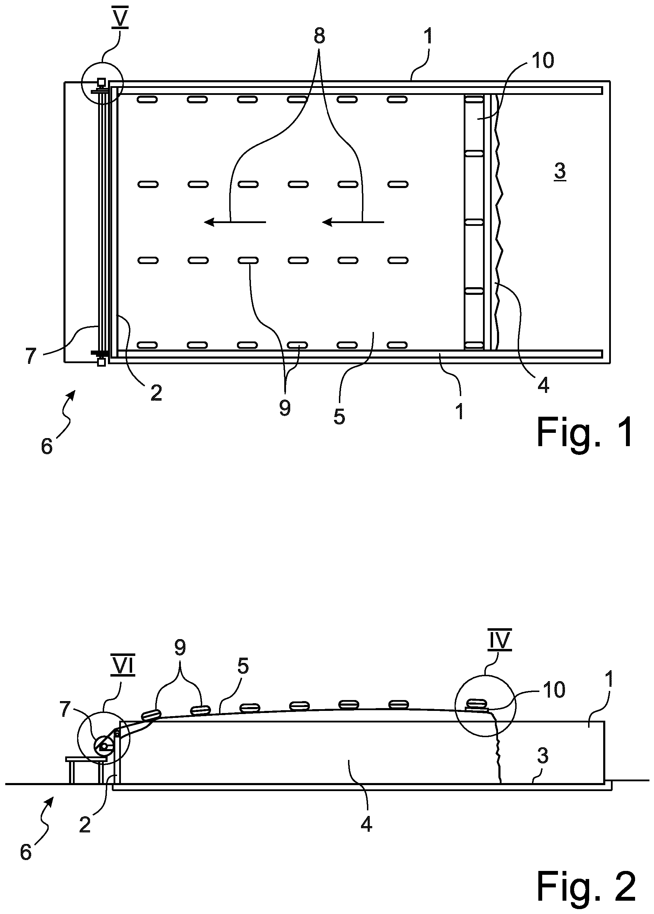

Figur 2 zeigt die Schüttung 4 in einer Seitenansicht, sie ist über weite Bereiche mit dem Flächenelement 5 belegt. Auf das Flächenelement 5 sind Bewehrungselemente 9 aufgelegt.

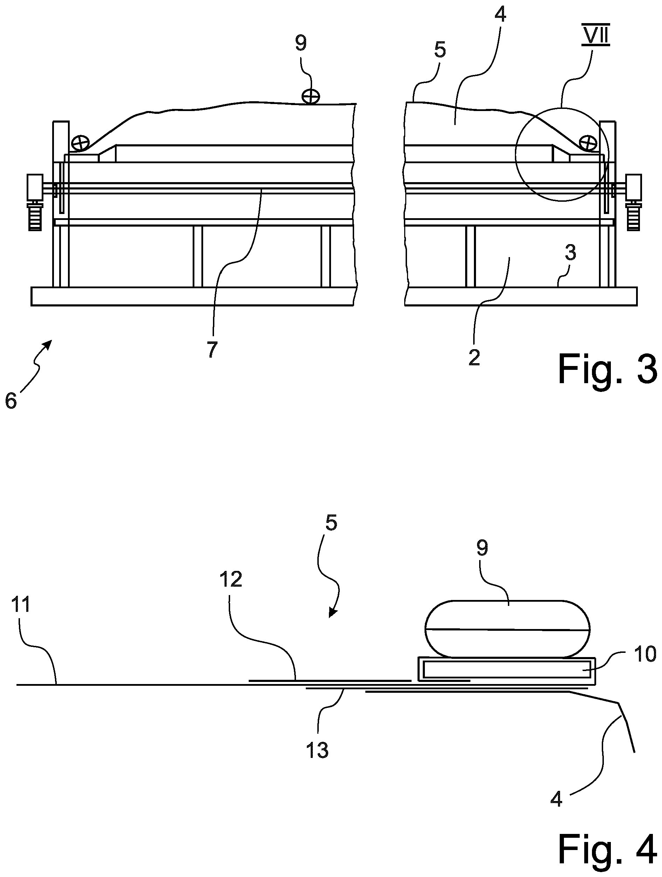

Figur 3 zeigt, dass die Aufwickelwelle 7 der Aufwickelungseinrichtung 6 über die gesamte Breite des Fahrsilos verläuft.

Die in Figur 4 gezeigte Einzelheit zeigt die vordere Kante des Flächenelementes 5 im Bereich der Entnahme von Schüttgütern aus der Schüttung 4. Für dieses freie Ende des Flächenelementes 5 ist ein Abschlussprofil 10 vorgesehen. Das Flächenelement 5 kann um dieses Abschlussprofil 10 gewickelt sein. Das Abschlussprofil 10 ist dann noch mit einem Bewehrungselement 9 beschwert.

Figur 4 zeigt noch, dass das Flächenelement 5 aus verschiedenen Folien und Lagen besteht. So ist eine Abdeckfolie 11 vorhanden, dazu auch ein Vogelschutz- bzw. Krähennetz 12. Direkt auf der Schüttung 4 liegt eine Überziehfolie 13.

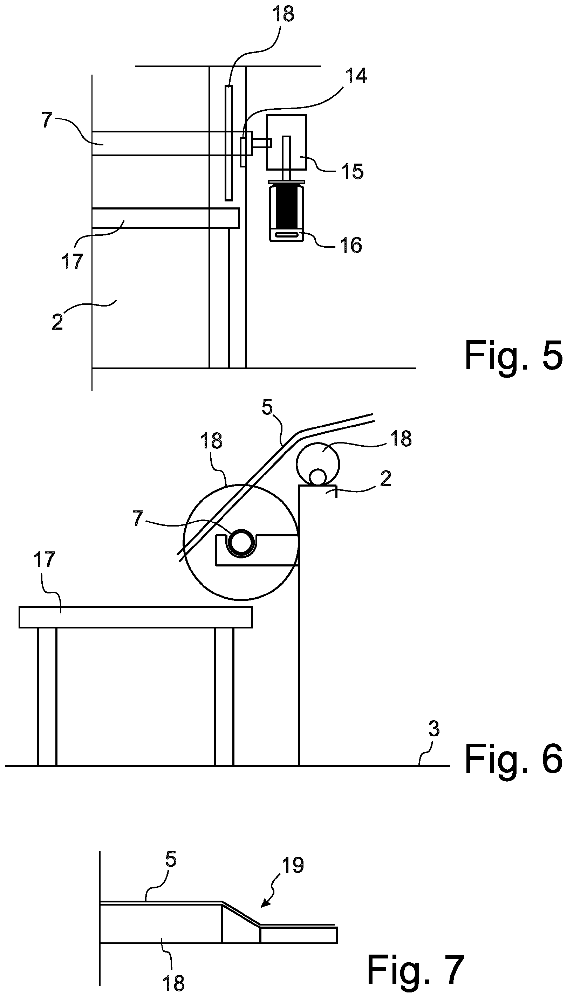

Figur 5 zeigt in einer Einzelheit noch einmal die Aufwickelwelle 7. Diese ist in Halterungen 14 aufgenommen. Die Aufwickelwelle 7 ist über ein Getriebe 15 mit einem Elektromotor 16 verbunden. Die aus Getriebe 15 und Elektromotor 16 gebildete Antriebseinrichtung ermöglicht ein Drehen der Aufwickelwelle 7 in beide Drehrichtungen. Der Aufwickelwelle 7 und der kürzeren Seitenwand 2 des Fahrsilos ist noch eine Ablagefläche 17 für auf dem Flächenelement 5 liegende Bewehrungselemente 9 zugeordnet.

Diese Ablagefläche 17 ist auch in Figur 6 gezeigt. Sie wird durch einen Tisch bereitgestellt, der der Aufwickelwelle 7 zugeordnet ist. Zusätzlich ist die Aufwickelwelle 7 noch mit Randscheiben 18 ausgerüstet.

Figur 6 zeigt noch, dass auf der kürzeren Seitenwand 2 des Fahrsilos ein Führungsprofil 18 angeordnet ist. Das Flächenelement 5 wird beim Aufwickeln auf die Aufwickelwelle 7 über dieses Führungsprofil 18 gezogen. Dieses ist in Figur 7 in einer Seitenansicht gezeigt, es wird deutlich, dass das Führungsprofil 18 in seinem oberen Längsrand an den freien Enden Rücksprünge 19 hat. Jeder Rücksprung 19 wird durch ein Reduzierstück im Führungsprofil 18 erreicht. Das Flächenelement 5 legt sich an das Führungsprofil 18 eng an, da es ja über dieses Führungsprofil 18 gezogen wird. Es erfolgt dann auch eine enge Anlage an dem Rücksprungabschnitt 19, dadurch ist erreicht, dass das Flächenelement 5 sich nicht von den Rändern entfernt.

## Patentansprüche

1. Anordnung zum Abdecken zumindest einer Schüttung in zumindest einem von Wänden begrenzten Fahrsilo, umfassend zumindest ein Flächenelement zum Auflegen auf die Schüttung,
**dadurch gekennzeichnet,**
**dass** für das Flächenelement (5) wenigstens eine Aufwickelungseinrichtung (6) vorgesehen ist, wobei die Aufwickelungseinrichtung (6) in einem Bereich des Fahrsilos anordbar ist, der dem Bereich der Entnahme von Schüttgut (4) aus dem Fahrsilo entfernt ist.

2. Anordnung nach Anspruch 1, **dadurch gekennzeichnet, dass** die Aufwickelungseinrichtung (6) einem kürzeren Seitenrand eines rechteckig ausgebildeten Fahrsilos zugeordnet ist.

3. Anordnung nach Anspruch 1 oder 2, **dadurch gekennzeichnet, dass** die Aufwickelungseinrichtung (6) außerhalb des Fahrsilos angeordnet ist.

4. Anordnung nach Anspruch 3, **dadurch gekennzeichnet, dass** die Aufwickelungseinrichtung (6) nahe einer Wand (2) des Fahrsilos angeordnet ist und dass auf der Wand (2) ein Führungsprofil (18) als Abgleiter für das Flächenelement (5) während seines Aufwickelns in der Aufwickelungseinrichtung (6) angeordnet ist.

5. Anordnung nach Anspruch 4, **dadurch gekennzeichnet, dass** das Führungsprofil (18) eine aufgestellte Kulisse ist, die mit einem längeren Seitenrand auf der Wand (2) aufliegt, wobei an den freien Enden ihres anderen längeren Seitenrandes nach außen abfallende Rücksprunge (19) ausgebildet sind.

6. Anordnung nach einem der vorhergehenden Ansprüche, **dadurch gekennzeichnet, dass** die Aufwickelungseinrichtung (6) zumindest eine Aufwickelwelle (7) hat.

7. Anordnung nach Anspruch 6, **dadurch gekennzeichnet, dass** der Aufwickelwelle (7) eine Antriebseinrichtung zugeordnet ist.

8. Anordnung nach Anspruch 7, **dadurch gekennzeichnet, dass** die Antriebseinrichtung in beide Drehrichtungen arbeitet.

9. Anordnung nach einem vorhergehenden Ansprüche, **dadurch gekennzeichnet, dass** das Flächenelement (5) mehrlagig ist.

10. Anordnung nach einem der vorhergehenden Ansprüche, **dadurch gekennzeichnet, dass** das Flächenelement (5) mit Bewehrungselementen (9) belegt ist.

11. Anordnung nach Anspruch 10, **dadurch gekennzeichnet, dass** der Aufwickelungseinrichtung (6) zumindest eine Ablagefläche (17) für die Bewehrungselemente (9) zugordnet ist.

12. Anordnung nach einem der vorhergehenden Ansprüche, **dadurch gekennzeichnet, dass** das Flächenelement (5) am im Bereich der Entnahme von Schüttgut (4) aus dem Fahrsilo angeordneten freien Ende zumindest ein Abschlussprofil (10) hat.
